# EUROPEAN PATENT SPECIFICATION

(11) **EP 0 906 707 B1**
(45) Date of publication and mention of the grant of the patent: **04.08.2004**
(21) Application number: 97921865.8
(22) Date of filing: 20.05.1997
(51) Int. Cl.: H04Q 3/72, H04M 11/06

(54) **METHOD AND SYSTEM FOR ESTABLISHING A TELECOMMUNICATION CONNECTION BETWEEN TWO TERMINALS IN A TELECOMMUNICATIONS SYSTEM**
VERFAHREN UND VORRICHTUNG ZUM AUFBAU EINER TELEKOMMUNIKATIONSVERBINDUNG ZWISCHEN ZWEI ENDGERÄTEN IN EINEM TELEKOMMUNIKATIONSSYSTEM
PROCEDE ET DISPOSITIF AUX FINS DE L'ETABLISSEMENT D'UNE CONNEXION DE TELECOMMUNICATIONS ENTRE DEUX TERMINAUX D'UN SYSTEME DE TELECOMMUNICATIONS

(30) Priority: 21.05.1996 FI 962147; 07.01.1997 FI 970075
(43) Date of publication of application: 07.04.1999
(73) Proprietor: TeliaSonera Finland Oyj, 00510 Helsinki (FI)
(72) Inventor: ROMO, Jorma, FIN-00051 Tele (FI); KÄÄRIÄ, Petteri, FIN-00051 Tele (FI); YLI-ÄYHÖ, Janne, FIN-00051 Tele (FI)
(74) Representative: Simmelvuo, Markku Kalevi
(86) International application number: PCT/FI1997/000292
(87) International publication number: WO 1997/044964

(56) References cited:
- EP-A- 0 549 127
- EP-A- 0 674 419
- GB-A- 2 302 631
- US-A- 4 959 856

## Description

The invention relates to a method defined in the preamble of the claim 1 and a system set forth in the preamble of claim 6 for establishing a telecommunication connection in a telecommunications system.

It is previously known to use a method for establishing a telecommunication connection between two terminal devices in a telecommunications system, where the terminal device receiving the connection, e.g. a telephone and a telefax terminal in combination, identifies the sending terminal device and thus based on the identification opens the connection. For instance in the patent publication DE 4008968 a connection is established between two terminal devices and after the connection has been established the terminal device receiving the connection determines from the received signal its functional form, e.g. whether speech, images, text or any other information is sent or received. European Patent EP-A - 549 127 discloses the determination of the network service type from the caller-id.

Nowadays a teleoperator offers attainability service to secure the attainability, where calls or telecopy messages of the same number can be chained to more numerous physical extensions through a telecommunications system. If the same calling number is called both by a phone and a telefax, the problem is that it is not possible to identify the calling terminal device in the telecommunications network before establishing the connection, e.g. telefax terminal identification, but the identification takes place only in the receiving terminal device. Then the call chaining to different objects cannot either be made, which is effected on the grounds of the calling terminal device of the telecommunications network.

The purpose of the invention is to eliminate the drawbacks mentioned above. The purpose of the invention is particularly to set forth the independence of a terminal device receiving the connection from the identification of the operational mode of the connection. The purpose of the invention is also to set forth the attainability service that is obtained, when the identification of the terminal device is made already in the telecommunications network and therefore the connection is directed to a proper terminal device or call chaining.

For the characteristic features of the invention reference is made to accompanying claims.

In the method according to the invention a telecommunication connection is established between two terminal devices in a telecommunications system, which includes a telecommunications network. To the telecommunications network have been combined one or more telecommunications exchange. In the method the first terminal device contacts to another terminal device through the telecommunications network, where the first terminal device comprises a telephone, telefax terminal or the like. The second terminal device comprises a telephone, telefax terminal or the like working with the same calling identification. In the method the calling signal of the first terminal device is identified and based on this identification the connection mode to the second terminal device is selected, or the question is, whether to choose a telephone or facsimile connection. According to the invention the calling signal of the first terminal device is identified in the telecommunications network and the connection is directed based on this identification to the second terminal device.

Because of the invention the selection of the terminal device answering the call and the call chaining can be made after the identification of the terminal device that is calling in the telecommunications network, whereby a teleoperator may offer more versatile attainability service. The terminal, e.g. a telefax, can be more simple and more advantageous, because there is no need for the terminal device to take care of the identification.

In one embodiment of the method the first terminal device is identified in the identifying device during certain time period, so that if after the expiration of this period the first terminal device cannot be identified, a connection is established to another terminal device in compliance with an assumption connection set in the telecommunications network. In other words, if the first terminal device does not send a calling signal typical to a telefax terminal, a connection is established between the terminal devices as a usual call.

In one embodiment of the method it is used in the identification of the first terminal device for the telecommunication between the telecommunications network and the identifying device TUO, R2, ILM/PRI or corresponding signalling.

In one embodiment of the method the connection is directed to the telephone calling number or through call chaining to certain more numerous telephone extensions, if the first terminal device is a telephone and the connection is directed to the call number or through the telefax terminal to certain several telefax extension, if the first terminal device is identified as a telefax terminal.

The telecommunications system according to the invention includes terminal devices, between which the desired connection will be established and to which the terminal devices are connected. The system includes also a telecommunications exchange, through which the connection will be routed and which is connected to the telecommunications network. According to the invention the telecommunications network includes an identification device identifying the calling signal of the terminal device, which establishes the connection, and sending a signal to the telecommunications network based on the identification.

In one embodiment of the system the telecommunications exchange is an intelligent network exchange or an intelligent network exchange connected to the telecommunications exchange. The intelligent network exchange uses more versatile signalling and offers more varied services than the telecommunications exchange.

In one embodiment of the system the telecommunications network is a telephone network.

In one embodiment of the system the telephone device comprises a telephone, a telefax device or the like.

In one embodiment of the system the terminal device establishing the connection is a telefax terminal, whereby the frequency of the terminal device is 1100 Hz = 38 Hz and the calling signal is on during 0,5 seconds and off during 3 seconds. The calling signal is also repeated during 35 second ± 5 seconds.

The invention will be described in detail in the following by exemplary embodiments with reference to the enclosed drawing, in which:
figure 1 shows a system according to the invention;
figure 2 shows a flow chart of signals in one embodiment according to the invention;
figure 3 shows a flow chart of signals in another embodiment according to the invention.

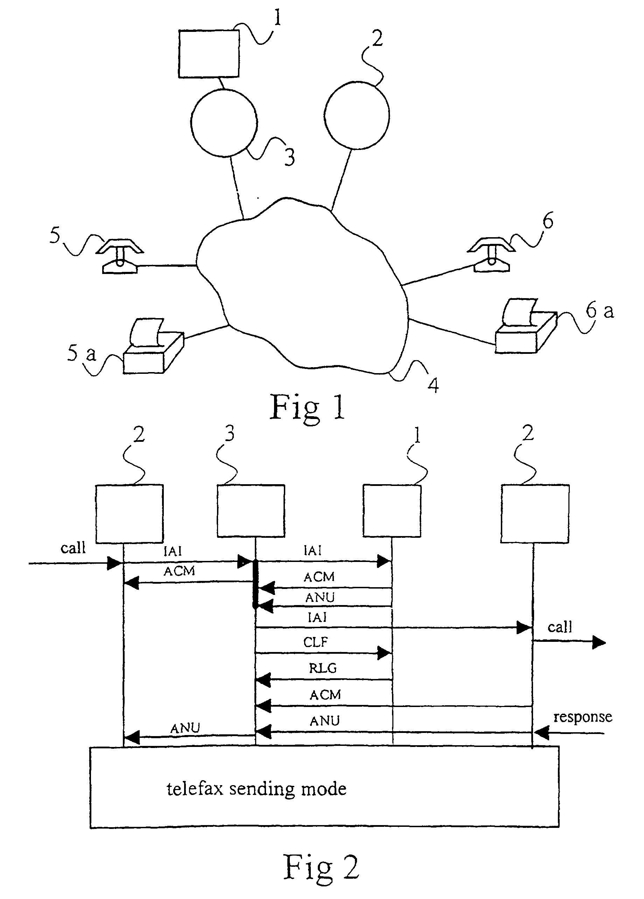

In the figure 1 has been presented a system according to the invention. Terminal devices 5, 6 have been connected to the telecommunications network 4. The telecommunications network 4 can be composed of one or more different networks, e.g. a combination of a local network and a usual network. The telecommunications exchange 2 and the intelligent network exchange 3 have been connected to the telecommunications network 4. The identifying device I has been connected to the intelligent network 3. The telecommunications exchange 2 and the intelligent network exchange 3 may also be stationary connected to each other or they can be parts of one and same exchange.

In the figure 2 has been presented a flow chart of signals for different parts of the method according to the invention by a certain signalling mode (TUP), when the establishing of a connection of two telefax terminals 5a, 6a is concerned. The telefax terminal 5a sends a calling signal to the telecommunications exchange 2, which sends IAI-signal, starting address signal, to the intelligent network exchange 3, which then sends IAI-signal to the identifying device 1. The intelligent network exchange 3 sends ACM-signal, acknowledgement of the reception of the message, to the telecommunications exchange 2. The identifying device 1 answers first by ACM-signal to the intelligent network exchange 3 and then by ANU-signal, answering signal, to the intelligent networks exchange 3, and in the message of the answering signal there is indicated the success of the identification of the telefax terminal 5a establishing the connection. A thickened part in the short line leaving the intelligent network exchange box 3 means the time, which the identifying device 1 spends for identifying the telefax terminal 5a. The intelligent network exchange 3 sends IAI-signal to the telecommunications exchange 2 and the signal includes the calling number of the telefax terminal 6a. The telecommunications exchange 2 sends a call to the telefax terminal 6a. The intelligent network exchange 3 sends still CLF-signal, breaking of the connection, to the identifying device 1 and the identifying device 1 answers by RLG-signal, acknowledgement of the breaking of the connection, to the intelligent network exchange 3. The telecommunications exchange 2 sends ACM-signal to the intelligent network exchange 3 which signal indicates that the telefax terminal 6a is free for the establishing of the connection. The telefax terminal 6a answers to the call of the telefax terminal 5a to the telecommunications exchange 2, which sends an ANU-signal, the telefax terminal 6a is answering, to the intelligent network exchange 3. The intelligent network exchange 3 sends ANU-signal to the telecommunications exchange 2 and the connection between the telefax terminals 5a, 6a has been established.

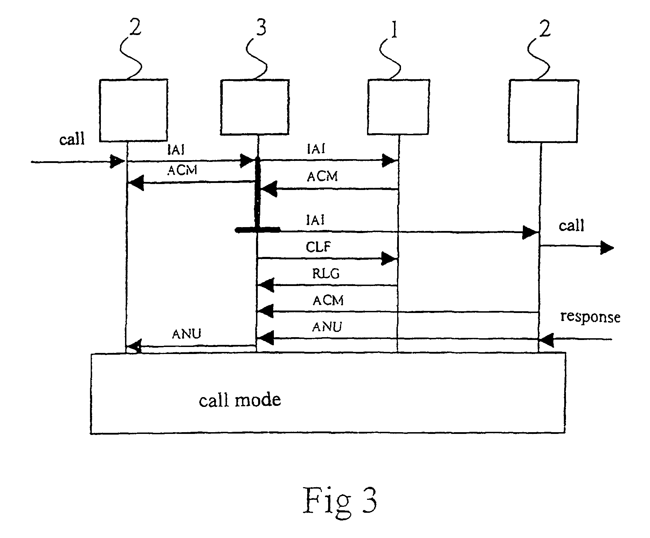

In the figure 3 has been presented a flow chart of signals for different parts of the method according to the invention, when the establishing of the connection of two telephones 5, 6 is in question. The signal flow is almost the same as in connection with telefax terminals 5a, 6a in the figure 2. The identifying device I tries to identify the call signal coming from the intelligent network exchange 3 and the identifying is continued, until the time limit used in the identifying is reached. Then the intelligent network exchange 3 sends IAI-signal with an assumption value having the call number of the telephone 6.

In the following will be explained the operation of the telecommunications network model for the system in question. The calling terminal device 5 calls the same telephone/telefax calling number. This calling number is identified in the telecommunications network 4 as requiring the intelligent network guiding, whereby as a consequence the call is directed to the intelligent network exchange 3 and under the service logic, SCF, belonging to the service guiding function in the intelligent network exchange 3. In the SCF the service identifies that a "telefax identification" -user is concerned and directs the connection to a separate identifying device 1. The identifying device 1 is connected to a communications network 4 by a normal signalling (TUP, R2, ILM/PRI). The identifying device I listens the connection in order to observe from the line the calling signal of the telefax terminal 5a.

In the following the operation of the identification service will be explained, which the attainability service utilizes. The identification service routes the call to the identification device 1 and actuates at the same time a very short "no answer" time control T1, duration 5-10 s, and remains to wait either for an answer or the end of the time control. The identifying device 1 searches the calling signal of the telefax terminal 5a. If the calling signal is not found during the time control tuned in the identification service, the identification service makes after the time control has gone off a new routing to the number of the telephone 6 or to the attainability chain. The identification service breaks off the connection from the identification service to the identifying device 1. If the calling signal of the telefax terminal 5a is observed, the identification device 1 sends an ANU-signal that the intelligent network exchange 3 suppresses. The identification service routes the call to the telefax terminal 6a or the corresponding attainability chain, and the connection to the identification device 1 is broken off.

In the following will be explained the operation of the identifying device 1. The identification device I is connected to the telecommunications network 4 with a 2 Mbit/s connection. The identifying device should be able to perform the establishing and setdown procedures of a normal connection. The requirements for the application to be used for the identification itself are simple. It is, however, justifiable to make sure that the connection is coupled to the identifying device without any answering sign, which can be secured by a (network signalling) connection of TUP-level. When a call comes from the calling device 5, the identification of the telefax calling signal from the connection line is activated. If no calling signal is observed, identification efforts will be continued, until the connection breaks up by the intelligent network exchange 3. If the calling signal is identified, an answering sign is immediately sent. Then the intelligent network exchange 3 takes care of the setdown of the connection.

The invention is not limited only to the embodiment example described above, but many modifications are possible when staying within the scope of the following patent claims.

## Claims

1. A method for establishing a telecommunication connection in a telecommunication network, which telecommunication network comprises one or several telecommunication exchanges, a first and a second terminal connected to the telecommunication exchange, the first and the second terminal having a type, the method comprising the steps of:
the first terminal sending a connection establishment request to the telecommunication network;
**characterized in that** the method further comprises the steps of:
determining a predetermined default type for the telecommunication connection to be established from the first terminal to the second terminal;
determining a predetermined period of time for analyzing said connection establishment request of the first terminal;
analyzing centrally from said call establishment request the type of the first terminal in the telecommunication exchange;
in response to said analysis, selecting the type of the telecommunication connection to be established to the second terminal device;
in response to said analysis, if the type of the first terminal is identified, selecting the identified type of the telecommunication connection to be established;
in response to said analysis, if the type of the first terminal is unidentified and if said predetermined period of time has lapsed, selecting the predetermined default type of the telecommunication connection;
establishing the telecommunication connection from the first terminal to the second terminal by using the selected type of the telecommunication connection.

2. A method as claimed in claim 1, **characterized in that** said step of analyzing is performed by using a signalling protocol between said exchanges when establishing the telecommunication connection.

3. A method as claimed in claim 2, **characterized in that** said signalling protocol can be one of the following list: TUP, R2, lLM/RPl.

4. A method as claimed in claims 1, 2 or 3, **characterized in that** if the type of the first terminal is a telephone terminal and if a call chaining service is used by the second terminal then the telecommunication connection to be established is directed to a telephone extension in said call chaining service.

5. A method as claimed in claims 1, 2 or 3, **characterized in that** if the type of the first terminal is a telefax terminal and if a call chaining service is used by the second terminal then the telecommunication connection to be established is directed to a telefax extension in said call chaining service.

6. A telecommunication network comprising:
a first and a second terminal;
one or several telecommunication exchanges (2), at least one of said telecommunication exchanges (2) comprising means for establishing the telecommunication connection from the first terminal to the second terminal through the telecommunication network (4);
means for sending from the first terminal a connection establishment request to the telecommunication network;
means for determining a default type for the connection to be established from the first terminal to the second terminal;
means for determining a period of time for analyzing the connection establishment request of the first terminal;
**characterized in that** the network further comprises:
a centralized analyzer for analyzing the type of the first terminal (5) and for sending the type of the first terminal to the second terminal;
the centralized analyzer being arranged, in response to said analysis, if the type of the first terminal is identified, to select the identified type of the telecommunication connection to be established;
the centralized analyzer being arranged, in response to said analysis, if the type of the first terminal is unidentified and if said predetermined period of time has lapsed, to select the predetermined default type of the telecommunication connection;
the centralized analyzer being arranged to establish the telecommunication connection from the first terminal to the second terminal by using the selected type of the telecommunication connection.

7. A system according to the claim 6, **characterized in that** the at least one telecommunications exchange (2) is an intelligent network exchange (3) or that an intelligent network exchange has been connected to the telecommunications exchange (2).

8. A system according to the claim 6, **chracterized in that** the telecommunications network (4) is a telephone network.

9. A system according to the claim 7 or 8, **characterized in that** the terminal device (5, 6) is a telephone and/or a telefax terminal.

10. A system according to any of the preceding claims 7 - 9,
**characterized in that** the first terminal device (5) is a telefax terminal with the frequency of the calling signal 1100 Hz ± 38 Hz, and which calling signal is 0,5 seconds on and 3 seconds off; and that the calling signal is repeated 35 seconds ± 5 during seconds.

## Patentansprüche

1. Verfahren zum Aufbau einer Telekommunikationsverbindung in einem Telekommunikationsnetzwerk, wobei das Telekommunikationsnetzwerk eine oder mehrere Telekommunikationsvermittlungen aufweist, ein erstes und ein zweites mit der Telekommunikationsvermittlung verbundenes Endgerät, wobei das erste und das zweite Endgerät einem Typ entspricht, und wobei das Verfahren die Schritte aufweist:
- das erste Endgerät sendet eine Verbindungsaufbauanfrage an das Telekommunikationsnetzwerk;
**dadurch gekennzeichnet,**
**dass** das Verfahren ferner die Schritte aufweist:
- Bestimmen eines vorbestimmten Standardtyps für die von dem ersten Endgerat zum zweiten Endgerät aufzubauende Telekommunikationsverbindung;
- Bestimmen eines vorbestimmten Zeitintervalls zum Auswerten der Verbindungsaufbauanfrage des ersten Endgerätes;
- zentrales Auswerten des Typs des ersten Endgerätes aus der Anrufaufbauanfrage in der Telekommunikationsvermittlung;
- Auswahlen des Typs der zu dem zweiten Endgerät aufzubauenden Telekommunikationsverbindung in Reaktion auf die Auswertung;
- falls der Typ des ersten Terminals identifiziert wurde, Auswählen des identifizierten Typs der aufzubauenden Telekommunikationsverbindung in Reaktion auf die Auswertung;
- falls der Typ des ersten Endgerätes nicht identifiziert wurde und falls das vorbestimmte Zeitintervall abgelaufen ist, Auswählen des vorbestimmten Standardtyps der Telekommunikationsverbindung in Reaktion auf die Auswertung;
- Aufbauen der Telekommunikationsverbindung von dem ersten Endgerät zu dem zweiten Endgerät mittels des ausgewählten Typs der Telekommunikationsverbindung.

2. Verfahren nach Anspruch 1,
**dadurch gekennzeichnet,**
**dass** der Schritt des Auswertens mittels eines Anzeigeprotokolls zwischen den Vermittlungen durchgeführt wird, wenn die Telekommunikationsverbindung aufgebaut wird.

3. Verfahren nach Anspruch 2,
**dadurch gekennzeichnet,**
**dass** das Anzeigeprotokoll aus der folgenden Liste stammt: TUP, R2, ILM/RPI.

4. Verfahren nach Anspruch 1, 2 oder 3,
**dadurch gekennzeichnet,**
**dass** der Typ des ersten Endgerätes ein Telefonendgerat ist und dass, falls ein Anrufverkettungsdienst von dem zweiten Endgerat genutzt wird, die aufzubauende Telekommunikationsverbindung an eine Telefonnebenstelle des Anrufverkettungsdienstes geleitet wird.

5. Verfahren nach Anspruch 1, 2 oder 3,
**dadurch gekennzeichnet,**
**dass** falls der Typ des ersten Endgerätes ein Telefaxendgerät ist, und dass falls ein Anrufverkettungsdienst von dem zweiten Terminal genutzt wird, die aufzubauende Telekommunikationsverbindung an eine Telefaxnebenstelle des Anrufverkettungsdienstes geleitet wird.

6. Ein Telekommunikationsnetzwerk mit:
- einem ersten und einem zweiten Endgerät;
- einer oder mehrerer Telekommunikationsvermittlungen (2), wobei mindestens eine der Telekommunikationsvermittlungen (2) Mittel zum Aufbauen der Telekommunikationsverbindung von dem ersten Endgerät zu dem zweiten Endgerät uber das Telekommunikationsnetzwerk (4) aufweist;
- Mittel zum Senden einer Verbindungsaufbauanfrage an das Telekommunikationsnetzwerk von dem ersten Endgerat;
- Mittel zum Bestimmen eines Standardtyps für die von dem ersten Endgerät zu dem zweiten Endgerät aufzubauende Verbindung;
- Mittel zum Bestimmen eines Zeitintervalls zum Auswerten der Verbindungsaufbauanfrage des ersten Endgerätes;
**dadurch gekennzeichnet, dass** das Netzwerk ferner aufweist:
- eine zentralisierte Auswerteeinrichtung zum Auswerten des Typs des ersten Endgerätes (5) und zum Senden des Typs des ersten Endgerätes an das zweite Endgerät;
- wobei die zentralisierte Auswerteeinrichtung so ausgeführt ist, dass falls der Typ des ersten Endgerätes identifiziert wird, in Reaktion auf die Auswertung der identifizierte Typ der aufzubauenden Telekommunikationsverbindung ausgewählt wird;
- wobei die zentralisierte Auswerteeinrichtung so ausgeführt ist, dass falls der Typ des ersten Endgerätes nicht identifiziert wird, und falls das vorbestimmte Zeitintervall abgelaufen ist, in Reaktion auf die Auswertung der vorbestimmte Standardtyp der Telekommunikationsverbindung ausgewahlt wird;
- wobei die zentralisierte Auswerteeinrichtung so ausgeführt ist, dass zum Aufbau der Telekommunikationsverbindung von dem ersten Endgerät zu dem zweiten Endgerät der ausgewählte Typ der Telekommunikationsverbindung benutzt wird.

7. System nach Anspruch 6,
**dadurch gekennzeichnet,**
**dass** die mindestens eine Telekommunikationsvermittlung (2) eine intelligente Netzwerkvermittlung (3) ist oder dass eine intelligente Netzwerkvermittlung an die Telekommunikationsvermittlung (2) verbunden ist.

8. System nach Anspruch 6,
**dadurch gekennzeichnet,**
**dass** das Telekommunikaticnsnetzwerk (4) ein Telefonnetzwerk ist.

9. System nach Anspruch 7 oder 8,
**dadurch gekennzeichnet,**
**dass** die Endgeräteeinrichtung (5, 6) ein Telefon- und/oder ein Telefaxendgerät ist.

10. System nach einem der vorhergehenden Ansprüche 7-9,
**dadurch gekennzeichnet,**
**dass** die erste Endgeräteeinrichtung (5) ein Telefaxendgerät mit der Frequenz des Anrufsignals 1.100 Hz ± 38 Hz ist, dessen Anrufsignal 0,5 Sekunden an und 3 Sekunden aus ist, und wobei das Anrufsignal während 35 ± 5 Sekunden wiederholt wird.

## Revendications

1. Procédé pour établir une connexion de télécommunications dans un réseau de télécommunications, lequel réseau de télécommunications comprend un ou plusieurs centraux de télécommunications, un premier et un deuxième terminaux connectés au central de télécommunications, le premier et le deuxième terminaux ayant un type, le procédé comprenant les étapes consistant en :
l'envoi par le premier terminal d'une demande d'établissement de connexion au réseau de télécommunications,
**caractérisé en ce que** le procédé comprend en outre les étapes consistant à :
déterminer un type par défaut prédéterminé pour la connexion de télécommunications à établir du premier terminal au deuxième terminal,
déterminer une période de temps prédéterminée pour analyser ladite demande d'établissement de connexion du premier terminal,
analyser de manière centralisée à partir de ladite demande d'établissement d'appel le type du premier terminal dans le central de télécommunications,
en réponse à ladite analyse, sélectionner le type de connexion de télécommunications à établir vers le dispositif de deuxième terminal,
en réponse à ladite analyse, si le type du premier terminal est identifié, sélectionner le type identifié de la connexion de télécommunications à établir,
en réponse à ladite analyse, si le type du premier terminal n'est pas identifié et si ladite période de temps prédéterminée s'est écoulée, sélectionner le type par défaut prédéterminé de la connexion de télécommunications,
établir la connexion de télécommunications du premier terminal au deuxième terminal en utilisant le type sélectionné de la connexion de télécommunications.

2. Procédé selon la revendication 1, **caractérisé en ce que** ladite étape d'analyse est réalisée en utilisant un protocole de signalisation entre lesdits centraux lors de l'établissement de la connexion de télécommunications.

3. Procédé selon la revendication 2, **caractérisé en ce que** ledit protocole de signalisation peut être un de ceux de la liste suivante : TUP, R2, ILM/RPI.

4. Procédé selon les revendications 1, 2 ou 3, **caractérisé en ce que**, si le type du premier terminal est un terminal téléphonique et qu'un service de chaînage d'appels est utilisé par le deuxième terminal, alors la connexion de télécommunications à établir est dirigée vers un branchement téléphonique dans ledit service de chaînage d'appels.

5. Procédé selon les revendications 1, 2 ou 3, **caractérisé en ce que**, si le type du premier terminal est un terminal téléfax et qu'un service de chaînage d'appels est utilisé par le deuxième terminal, alors la connexion de télécommunications à établir est dirigée vers un branchement téléfax dans ledit service de chaînage d'appels.

6. Réseau de télécommunications comprenant :
un premier et un deuxième terminal,
un ou plusieurs centraux de télécommunications (2), au moins un desdits centraux de télécommunications (2) comprenant des moyens pour établir la connexion de télécommunications du premier terminal au deuxième terminal à travers le réseau de télécommunications (4),
des moyens pour envoyer depuis le premier terminal une demande d'établissement de connexion au réseau de télécommunications,
des moyens pour déterminer un type par défaut pour la connexion à établir du premier terminal au deuxième terminal,
des moyens pour déterminer une période de temps pour analyser la demande d'établissement de connexion du premier terminal,
**caractérisé en ce que** le réseau comprend en outre :
un analyseur central pour analyser le type du premier terminal (5) et pour envoyer le type du premier terminal au deuxième terminal,
l'analyseur centralisé étant disposé pour sélectionner le type identifié de la connexion de télécommunications à établir en réponse à ladite analyse, et si le type du premier terminal est identifié,
l'analyseur centralisé étant disposé pour sélectionner le type par défaut prédéterminé de la connexion de télécommunications, en réponse à ladite analyse, et si le type du premier terminal n'est pas identifié et que ladite période de temps prédéterminée s'est écoulée,
l'analyseur centralisé étant disposé pour établir la connexion de télécommunications du premier terminal au deuxième terminal en utilisant le type sélectionné de la connexion de télécommunications.

7. Système selon la revendications 6, **caractérisé en ce qu'**au moins un central de télécommunications (2) est un central de réseau intelligent (3) ou qu'un central de réseau intelligent a été connecté au central de télécommunications (2).

8. Système selon la revendication 6, **caractérisé en ce que** le réseau de télécommunications (4) est un réseau téléphonique.

9. Système selon les revendications 7 ou 8, **caractérisé en ce que** le dispositif de terminal (5, 6) est un terminal téléphonique et/ou de téléfax.

10. Système selon l'une quelconque des revendications 7 à 9, **caractérisé en ce que** le premier dispositif de terminal (5) est un terminal de téléfax avec une fréquence du signal d'appel de 1100 Hz ± 38 Hz, et que ce signal d'appel est ouvert pendant 0,5 seconde et fermé pendant 3 secondes, et que le signal d'appel est répété toutes les 35 secondes ± 5 durant les secondes.
